# FASCICULE DE BREVET EUROPEEN

(11) **EP 1 335 849 B1**
(45) Date de publication et mention de la délivrance du brevet: **02.11.2011**
(21) Numéro de dépôt: 01983653.5
(22) Date de dépôt: 30.10.2001
(51) Int. Cl.: B62D 25/08, B62D 29/00

(54) **FACE AVANT DE VEHICULE AUTOMOBILE COMPRENANT UNE POUTRE PARE-CHOCS**
VORDERFRONT EINES KRAFTFAHRZEUGES MIT EINER STOSSTANGE
MOTOR VEHICLE FRONT SURFACE COMPRISING A BUMPER BEAM

(30) Priorité: 06.11.2000 FR 0014192
(43) Date de publication de la demande: 20.08.2003
(73) Titulaire: VALEO SYSTEMES THERMIQUES, 78320 Le Mesnil Saint-Denis (FR)
(72) Inventeur: LESTAVEL, Jérôme, F-75017 Paris (FR); GUINEHUT, Sébastien, F-75014 Paris (FR); GUYOMARD, Jean-Nicolas, F-27930 Le Mesnil Fuguet (FR)
(74) Mandataire: Rolland, Jean-Christophe
(86) Numéro de dépôt international: PCT/FR2001/003366
(87) Numéro de publication internationale: WO 2002/036414

(56) Documents cités:
- WO-A-01/00478
- DE-A- 19 813 162
- US-A- 5 658 041

## Description

L'invention concerne une face avant de véhicule automobile et plus particulièrement une telle face avant comprenant une traverse supérieure dont dépendent deux montants latéraux.

Une face avant, appelée aussi façade avant, est un élément de structure susceptible d'intégrer divers équipements du véhicule tels que projecteurs, clignotants, avertisseur sonore, échangeur thermique, groupe moto-ventilateur ou module de refroidissement complet, etc.

La face avant, ainsi pourvue de ses équipements, constitue un module unitaire préparé et livré par l'équipementier et prêt à être monté sur le véhicule par le constructeur. Le montage de ce module unitaire se fait par raccordement à des éléments de structure latéraux du véhicule, tels que longerons, ailes ou coque, puis mise en place d'un pare-chocs ou bouclier frontal rapporté sur le module.

Une telle face avant est généralement réalisée sous la forme d'un élément monobloc, en particulier sous la forme d'un élément composite métal/plastique. Il est connu en effet, notamment d'après la publication EP-A-0 658 470, de réaliser une face avant sous la forme d'une armature métallique en tôle emboutie, sur laquelle est surmoulée une matière plastique, en particulier du type polyamide.

Il est connu d'associer à la face avant une poutre pare-chocs, encore appelée poutre bouclier, qui participe à la protection des composants du module en cas de choc frontal. Cette poutre pare-chocs comprend habituellement un profilé métallique, en forme de U ou de parallélépipède rectangle, qui est rapporté sur la face avant et solidarisé à cette dernière par des moyens de fixation, tels que des vis ou analogues. Cette poutre pare-chocs est destinée à recevoir ultérieurement le pare-chocs ou bouclier proprement dit. Comme cette poutre pare-chocs est un élément rapporté sur la face avant, il est nécessaire de prévoir des opérations de montage spécifiques sur les chaînes de fabrication.

L'invention a notamment pour but de faciliter et simplifier le montage.de la poutre pare-chocs.

Elle propose à cet effet une face avant de véhicule automobile, du type défini précédemment, laquelle comprend au moins une poutre pare-chocs intégrée aux deux montants par une technique d'hybridation entre la matière de la poutre pare-chocs et la matière des montants.

De ce fait, la poutre pare-chocs constitue un élément intégré à la face avant, et non,plus un élément rapporté sur cette face avant. La publication US-A-5 658 041 divulgue une telle face avant d'après le préambule de la revendication 1.

Dans ces conditions, la poutre pare-chocs participe à la structure de la face avant, sans pour autant altérer la fonction de protection qu'elle doit assumer.

Par l'expression "technique d'hybridation", on entend désigner toute technique qui permet d'associer étroitement une matière plastique à un insert, le plus souvent métallique, supprimant ainsi toute opération de fixation ou de montage.

Il peut s'agir notamment du surmoulage d'une matière plastique sur un insert en matière métallique ou plastique, d'un moulage par compression, ou encore d'un moulage du type bi-matière.

Dans un mode de réalisation préféré de l'invention, la poutre pare-chocs constitue un insert autour duquel sont moulés les deux montants.

Avantageusement, la poutre pare-chocs est un profilé ayant sensiblement une section en forme de U au travers duquel sont ménagés des trous traversants pour le passage de la matière des montants.

De manière préférentielle, la poutre pare-chocs est remplie intérieurement sur sensiblement toute sa longueur d'une matière de moulage qui est commune avec les deux montants.

Cette matière de moulage forme de préférence des nervures de renforcement situées dans la poutre pare-chocs.

Dans une forme de réalisation préférée de l'invention, la poutre pare-chocs est en une matière métallique.

Quant aux montants, ils sont réalisés avantageusement en une matière plastique choisie parmi les matières thermoplastiques et les matières thermodurcissables avec ou sans renfort. On préfère notamment utiliser un polyamide, en particulier un polyamide 6.

Conformément à l'invention, chacun des montants sont réalisé en deux parties, à savoir une partie supérieure intégrée à la traverse supérieure et une partie inférieure intégrée à la poutre pare-chocs. Des moyens de fixation sont alors prévus pour relier la partie supérieure et la partie inférieure de chaque montant.

On réalise ainsi une face avant en deux parties, à savoir une partie supérieure qui intègre la traverse supérieure et une partie inférieure qui intègre la poutre pare-chocs.

Dans une forme de réalisation de l'invention, la face avant comprend une seule poutre pare-chocs formant poutre bouclier.

Dans une autre forme de réalisation de l'invention, la face avant comprend une poutre pare-chocs principale formant poutre bouclier et une poutre pare-chocs additionnelle placée en dessous de la poutre pare-chocs principale formant poutre déflectrice.

La fonction de cette poutre pare-chocs additionnelle est d'assurer une protection en cas de choc frontal avec un piéton pour éviter que celui-ci ne se trouve coincé entre le pare-chocs proprement dit du véhicule et le sol.

Dans la description qui suit, faite seulement à titre d'exemple, on se réfère aux dessins annexés, sur lesquels :
- la figure 1 est une vue en perspective d'une face avant de véhicule selon une première forme de réalisation de l'invention ;
- la figure 2 est une vue arrière partielle montrant la liaison par hybridation entre la poutre pare-chocs et un montant latéral ;
- les figures 3 et 4 montrent différents types de nervure de la partie hybride ;
- la figure 5 est une vue en perspective d'une face avant selon une deuxième forme de réalisation de l'invention ; et
- la figure 6 est une vue en perspective d'une face avant selon une troisième forme de réalisation de l'invention, comportant deux poutres pare-chocs.

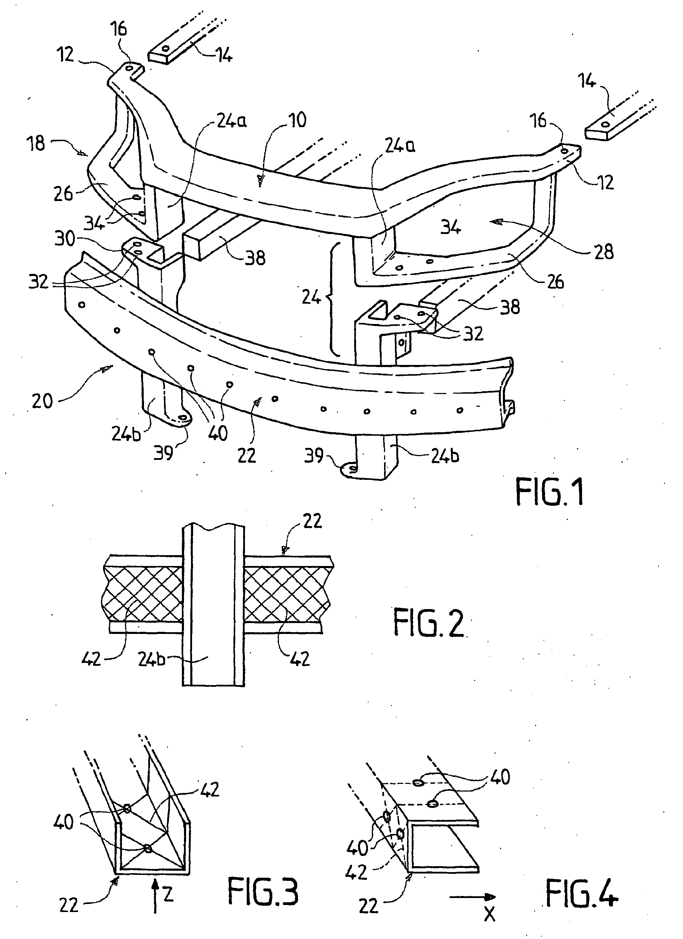

La face avant représentée sur la figure 1 comprend une traverse supérieure 10 dont les extrémités respectives 12 sont coudées et destinées à être fixées sur des longerons supérieurs 14 (représentés schématiquement) d'un véhicule automobile. Pour cela, chacune des extrémités 12 comprend un trou traversant 16 permettant le passage d'une vis ou analogue.

Dans l'exemple de réalisation représenté, la face avant est réalisée en deux parties, à savoir une partie supérieure 18 qui intègre la traverse supérieure et une partie inférieure 20 qui intègre une poutre pare-chocs 22.

La partie supérieure 18 est réalisée sous la forme d'un élément monobloc, en particulier sous la forme d'un élément composite métal/plastique.

De la traverse 10 dépendent les parties supérieures respectives 24a de deux montants latéraux 24, ou jambages, dont les parties inférieures respectives 24b sont intégrées à la poutre pare-chocs.

Les parties supérieures 24a des montants latéraux s'étendent vers le bas à partir de la traverse 10 et sont sensiblement verticales. Elles sont raccordées chacune aux extrémités respectives 12 de la traverse 10 par des montants obliques 26 pour délimiter deux logements 28 destinés à recevoir les projecteurs (non représentés) du véhicule.

Les parties inférieures 24b sont sensiblement verticales et sont munies en partie supérieure d'une plaque de fixation 30 destinée à coopérer chacune avec un montant oblique 26. Chacune des plaques 30 comporte des trous 32 destinés à venir en regard avec des trous 34 correspondants du montant oblique 26 pour permettre leur fixation par des vis ou analogue. Par ailleurs, chacune des parties inférieures 24b d'un montant comprend une plaque de fixation 36 destinée à être fixée à l'extrémité d'un longeron inférieur 38 du véhicule, représenté schématiquement.

Dans l'exemple de réalisation représenté, les parties inférieures 24b des montants dépassent en dessous de la poutre pare-chocs 22 et sont munies chacune d'une patte coudée 39 pouvant servir à la fixation d'un équipement particulier (non représenté).

La poutre pare-chocs 22 est, dans l'exemple, un profilé ayant sensiblement une section en forme de U. Ce profilé est avantageusement métallique et il possède une forme incurvée adaptée à la forme du pare-chocs proprement dit (non représenté) qui est destiné à être fixé ultérieurement sur la poutre pare-chocs.

Jusqu'à présent, la poutre pare-chocs constituait un élément rapporté, c'est-à-dire fixé sur la face avant.

Conformément à l'invention, cette poutre pare-chocs est intégrée aux deux montants 24, c'est-à-dire ici aux parties inférieures 24b des montants, par une technique d'hybridation entre la matière de la poutre pare-chocs 22 et la matière des montants.

Comme mentionné précédemment, une technique d'hybridation est une technique connue, en particulier une technique de surmoulage, de moulage par compression ou encore de moulage d'une matière, qui permet d'intégrer une matière plastique sur un insert, lequel est lui-même en matière métallique ou en matière plastique.

Conformément à l'invention, la poutre pare-chocs 22 constitue un insert autour duquel sont moulés les parties inférieures 24b des montants. On utilise ici avantageusement une technique de surmoulage.

A cet effet, l'âme de la poutre pare-chocs 22 comprend des trous traversants 40 pour le passage de la matière des montants.

Les montants sont réalisés avantageusement en une matière composite qui peut être soit une matière thermoplastique, soit une matière thermodurcissable. On préfère tout particulièrement utiliser une matière plastique du type polyamide, et notamment du polyamide 6 avec un renfort en fibres de verre ou de carbone.

Lors de l'opération de surmoulage, la matière plastique des montants vient s'intégrer étroitement autour de la poutre pare-chocs 22. Une partie de cette matière vient traverser la poutre pare-chocs grâce aux trous 40 précités.

Comme on peut le voir sur le détail de la figure 2, la matière plastique des montants vient remplir l'intérieur de la poutre pare-chocs 22 sur sensiblement toute sa longueur en formant des nervures 42 qui ont une fonction de renforcement ou de rigidification.

Comme montré sur les figures 3 et 4, ces nervures 42 peuvent être orientées soit selon l'axe des X du véhicule (axe longitudinal), soit selon l'axe des Z du véhicule (axe vertical).

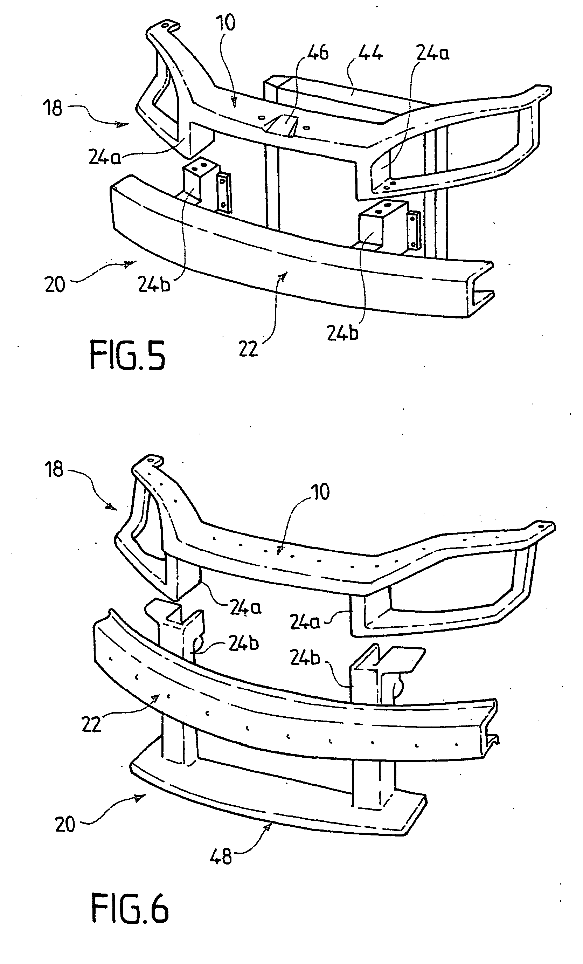

On se réfère maintenant à la figure 5 qui montre une face avant analogue à celle de la figure 1 si ce n'est que les parties inférieures 24b des montants latéraux 24 ne dépassent pas en dessous de la poutre pare-chocs 22, contrairement à la forme de réalisation de la figure 1.

On distingue également sur la figure 5 un module de refroidissement 44 destiné à venir se placer dans le logement défini entre la poutre supérieure 10 et les deux montants latéraux 24. On voit également que la partie centrale de la poutre supérieure 10 définit un élément de fixation 46 pour une serrure (non représentée) assurant la fermeture du capot moteur (non représenté).

La face avant de la figure 6 s'apparente étroitement à celle de la figure 1. La différence essentielle réside dans l'ajout d'une deuxième poutre pare-chocs 48 qui est solidaire des parties inférieures 24b des montants latéraux.

Ainsi, la face avant comporte deux poutres pare-chocs, une poutre pare-chocs principale 22 formant poutre bouclier et destinée à recevoir le pare-chocs proprement dit et une poutre pare-chocs additionnelle 48 placée en dessous de la poutre pare-chocs principale. Cette poutre pare-chocs additionnelle 48 forme poutre déflectrice et est destinée à assurer une protection en cas de choc frontal avec un piéton pour éviter que celui-ci ne se trouve coincé entre le véhicule et le sol.

La poutre pare-chocs 48 est réalisée en matière plastique nervurée. Elle est essentiellement plane et horizontale et elle est réalisée par moulage en même temps que les parties inférieures des montants.

Dans les formes de réalisation représentées, les montants latéraux 24 sont chacun constitués de deux parties, à savoir une partie supérieure 24a et une partie inférieure 24b, destinées à être assemblées entre elles.

Dans tous les cas, on constitue un élément modulaire qui peut être facilement assemblé sur le véhicule automobile et qui comporte une ou deux poutres pare-chocs intégrées, qui n'ont pas besoin d'être fixées ultérieurement sur la face avant, ce qui simplifie les opérations de montage et d'assemblage.

## Revendications

1. Face avant de véhicule automobile, comprenant une traverse supérieure dont dépendent deux montants latéraux, et une poutre pare-chocs (22; 48) intégrée aux deux montants (24) par une technique d'hybridation entre la matière de la poutre pare- chocs et la matière des montants **caractérisée en ce que** chacun des montants (24) est réalisé en deux parties, à savoir une partie supérieure (24a) intégrée à la traverse supérieure (10) et une partie inférieure (24b) intégrée à la poutre pare-chocs (22), et **en ce que** des moyens de fixation (32, 34) sont prévus pour relier la partie supérieure et la partie inférieure de chaque montant.

2. Face avant selon, la revendication 1, **caractérisée en ce que** la poutre pare-chocs (22) constitue un insert autour duquel sont moulés les deux montants (24).

3. Face avant selon la revendication 2, **caractérisée en ce que** la poutre pare-chocs (22) est un profilé ayant sensiblement une section en forme de U au travers duquel sont ménagés des trous traversants (40) pour le passage de la matière des montants.

4. Face avant, selon la revendication 3, **caractérisée en ce que** la poutre pare-chocs (22) est remplie intérieurement sur sensiblement toute sa longueur d'une matière de moulage qui est commune avec les deux montants (24).

5. Face avant selon la revendication 4, **caractérisée en ce que** la matière de moulage forme des nervures de renforcement (42) situées dans la poutre pare-chocs (22).

6. Face avant selon rune des revendications 1 à 5, **caractérisée en ce que** la poutre pare-chocs (22) est en une matière métallique.

7. Face avant selon l'une des revendications 1 à 6, **caractérisée en ce que** les montants (24) sont en une matière composite choisie parmi les matières thermoplastiques et les matieres thermodurcissables avec ou sans renfort.

8. Face avant selon la revendication 7, **caractérisée en ce que** la matière plastique est un polyamide, en particulier un polyamide 6.

9. Face avant selon l'une des revendications 1 à 8, **caractérisée en ce qu'**elle comprend une seule poutre pare- chocs (22) formant poutre bouclier.

10. Face avant selon l'une des revendications 1 à 8, **caractérisée en ce qu'**elle comprend une poutre pare-chocs principale (22) formant poutre bouclier et une poutre pare-chocs additionnelle (48) placée en dessous de la poutre pare-chocs principale et formant poutre déflectrice.

## Claims

1. Front face of an automotive vehicle, comprising an upper crossbar on which two side columns depend, and one fender bar (22; 48) integrated with the two columns (24) by a hybridization technique between the material of the fender bar and the material of the columns, **characterized in that** each of the columns (24) is realized in two parts, namely an upper part (24a) integrated with the upper crossbar (10) and a lower part (24b) integrated with the fender bar (22), and **in that** fixing means (32, 34) are provided for connecting the upper part and the lower part of each column.

2. Front face according to Claim 1, **characterized in that** the fender bar (22) constitutes an insert around which the two columns (24) are molded.

3. Front face according to Claim 2, **characterized in that** the fender bar (22) is a profile of substantially U-shaped section, through which profile through-holes (40) are made for the passage of the material of the columns.

4. Front face according to Claim 3, **characterized in that** the fender bar (22) is filled internally, over substantially the whole of its length, with a molding material which is common with the two columns (24).

5. Front face according to Claim 4, **characterized in that** the molding material forms reinforcing ribs (42) situated in the fender bar (22).

6. Front face according to one of Claims 1 to 5, **characterized in that** the fender bar (22) is made of a metallic material.

7. Front face according to one of Claims 1 to 6, **characterized in that** the columns (24) are made of a composite material chosen from amongst thermoplastic materials and thermosetting materials with or without reinforcement.

8. Front face according to Claim 7, **characterized in that** the plastics material is a polyamide, in particular a polyamide 6.

9. Front face according to one of Claims 1 to 8, **characterized in that** it comprises a single fender bar (22) forming a scuttle bar.

10. Front face according to one of Claims 1 to 8, **characterized in that** it comprises a main fender bar (22) forming the scuttle bar and an additional fender bar (48) placed beneath the main fender bar and forming a deflector bar.

## Patentansprüche

1. Frontteil eines Kraftfahrzeugs mit einem oberen Querträger, von dem zwei Seitenholme abhängen, und mit einem Stoßstangenträger (22; 48), der in die zwei Holme (24) durch eine Technik der Hybridisierung zwischen dem Material des Stoßstangenträgers und dem Material der Holme integriert ist, **dadurch gekennzeichnet, dass** jeder der Holme (24) in zwei Teilen hergestellt wird, nämlich einem oberen Teil (24a), der in den oberen Querträger (10) integriert ist, und einen unteren Teil (24b), der in den Stoßstangenträger (22) integriert ist, und dass Befestigungseinrichtungen (32, 34) vorgesehen sind, um den oberen Teil und den unteren Teil jedes Holms zu verbinden.

2. Frontteil nach Anspruch 1, **dadurch gekennzeichnet, dass** der Stoßstangenträger (22) einen Einsatz bildet, um den herum die zwei Holme (24) geformt sind.

3. Frontteil nach Anspruch 2, **dadurch gekennzeichnet, dass** der Stoßstangenträger (22) ein Profilteil ist, das im Wesentlichen einen U-förmigen Querschnitt hat, durch den hindurch Durchgangslöcher (40) für den Durchlass des Materials der Holme ausgespart sind.

4. Frontteil nach Anspruch 3, **dadurch gekennzeichnet, dass** der Stoßstangenträger (22) innen über im Wesentlichen seine ganze Länge mit einem Formmaterial gefüllt ist, das dem der beiden Holme (24) gleich ist.

5. Frontteil nach Anspruch 4, **dadurch gekennzeichnet, dass** das Formmaterial Verstärkungsrippen (42) bildet, die sich in dem Stoßstangenträger (22) befinden.

6. Frontteil nach einem der Ansprüche 1 bis 5, **dadurch gekennzeichnet, dass** der Stoßstangenträger (22) aus einem metallischen Material ist.

7. Frontteil nach einem der Ansprüche 1 bis 6, **dadurch gekennzeichnet, dass** die Holme (24) aus einem Verbundmaterial bestehen, das aus den thermoplastischen und den wärmehärtbaren Materialien mit oder ohne Verstärkung ausgewählt wird.

8. Frontteil nach Anspruch 7, **dadurch gekennzeichnet, dass** der Kunststoff ein Polyamid, insbesondere ein Polyamid 6 ist.

9. Frontteil nach einem der Ansprüche 1 bis 8, **dadurch gekennzeichnet, dass** es einen einzigen Stoßstangenträger (22) enthält, der einen Stoßfängerträger bildet.

10. Frontteil nach einem der Ansprüche 1 bis 8, **dadurch gekennzeichnet, dass** es einen Hauptstoßstangenträger (22), der einen Stoßfängerträger bildet, und einen zusätzlichen Stoßstangenträger (48) aufweist, der unter dem Hauptstoßstangenträger angeordnet ist und einen Prallträger formt.
